# EUROPEAN PATENT APPLICATION

(11) **EP 2 725 668 A1**
(43) Date of publication of application: **30.04.2014**
(21) Application number: 13190313.0
(22) Date of filing: 25.10.2013
(51) Int. Cl.: H02G 1/08, G02B 6/44

(54) **Shuttle for treading ducts and kit for laying a dragging wire into high length conduit**

(30) Priority: 25.10.2012 IT MI20121814
(71) Applicant: SB-LAB S.A., 7745 Li Curt (CH)
(72) Inventor: Lersa, Pierluigi, CH-7745 Li Curt (CH)
(74) Representative: Leihkauf, Steffen Falk

(57) **Abstract**

A shuttle (10) for laying a dragging wire (4) in a conduit (100), suitable to run along the conduit (100) from a first end (6) to a second end (8) thereof, according to a forward direction (5) by dragging said dragging wire (4), said shuttle (10) being operatively pushed by a pressurized air flow (2) inserted into the conduit (100) at said first end (6) of the conduit, said shuttle (10) having a front end (12) and a rear end (13) with respect to said forward direction (5), comprising a sleeve portion (14), a front wall (17) closing anteriorly said sleeve portion (14), an elongated member (20) arranged within the sleeve portion (14), having a second longitudinal axis (C-C), said elongated member (20) a second free end (22) transversally mobile from a rest position to a position that is displaced transversally when it is stressed with an exerted transversal force (N), elastic connection means (23) connecting the elongated member (20) to the sleeve portion (14) in a transversal direction, suitable to exert an elastic force (F) for self-aligning the sleeve portion (14) with respect to the elongated member (20) when the second end (22) is in said displaced position to align the first longitudinal axis (P-P) to the second longitudinal axis (C-C). Furthermore, the present invention relates to a closure device (50) of a conduit (100) comprising a tubular-shaped elastic sealing member (54), said sealing member (54) defining a longitudinal axis L-L, a first compression member (55) coupleable to said first end (61), a secondo compression member (56) coupleable to said second end, compression means suitable to press said sealing member (54) between said first compression member (55) and said second compression member (56), so that the sealing member (54) radially expanding outwardly, thus increasing the diameter thereof, a pressurized air inlet (80) through the closure device (50), a through opening (51) through the closure device 50 to allow the passage of the dragging wire.

## Description

The present invention relates to the field of the positioning or laying of cables within conduits having a very large length. Furthermore, the present invention also relates to the field of the inspection of conduits having a large length by visual means associated to a dragging device that is suitable to run along the conduit.

More particularly, the present invention relates to a dragging device, or shuttle, which can be actuated by a pressurized air flow in the conduit, suitable to run along the conduit dragging the end of a guide wire or dragging wire.

A technique generally used for laying a cable or cable bundle within a conduit is to preventively lay a dragging wire, or guide wire, from a first open end of the conduit to a second, opposite open end of the conduit, so that a first end of such wire, once it has been inserted in the first conduit end, runs, in a forward travel, the entire length, until exiting the second conduit end. To such first wire end went out from the second conduit end, an end of the cables to be inserted into the conduit, for example electric cables, is tied and, subsequently, the second end of the dragging wire is pulled so as to drag the cables into the conduit along a return path from the second conduit end to the first end.

In order to collect, downstream of the shuttle, a thrust pressure sufficient to push it throughout the conduit length, it is necessary to close the conduit end remaining behind the shuttle by a closure member and insufflating pressurized air into the chamber formed by the duct wall and closed anteriorly by the shuttle e posteriorly by the closure member. In other terms, the shuttle is configured to move inside the conduit as a piston in its cylinder by the action of the pressurized air thrust.

Some dragging devices, or shuttles having a portion to receive the air thrust having a conical shape, for example, an umbrella or a parachute shape, facing the air flow direction and connection means of the dragging wire.

Among these devices, some are substantially umbrella shaped or with a conical section highly divergent or ogive-shaped, and a connection point of the dragging wire along a central axis.

In particular, the patent application US 2005/0173686 A1 shows a conical-shaped device to guide a wire in a conduit, in which such device has a rounded head with a contact end, a stabilization skirt, and a connection mechanism for the wire within the skirt. The stabilization skirt is frusto-conical, elastic, and plumed and has projections.

This device, while being capable of transporting the dragging wire end along short lengths within the conduit, has several drawbacks, among which the drawback that it is not capable of constantly maintaining a position substantially parallel to the conduit, and to be instead highly prone to the risk of sticking into the conduit, preventing the further advancement thereof.

During the forward motion, in fact, such a known device tends to move itself, inclining its axis in an uncontrollable manner, thereby inevitable involving the sticking thereof. Furthermore, when the device axis is in an inclined position with respect to the conduit axis, the air pressure tends to increase such inclination, until arranging it in a transversal direction with respect to the conduit axis, or even rotating it until inverting the direction thereof and not allowing the successive advancement thereof.

In other terms, the above-mentioned device, while being partially deformable and capable of positioning centrally with respect to the conduit, it may be uncontrollably inclined during its travel with respect to the conduit axis, thus tending to stick and arrange transversally to the same conduit, thereby preventing to continue its travel.

Another drawback of the above-mentioned device is that when for some reason, it meets an obstacle, the air pressure tends to inflate and open the skirt, thereby considerably deforming it, until, in extreme cases, to turn it forward, thus taking a substantially inverted shape with respect to the initial shape, and not being able anymore to oppose a suitable aerodynamic resistance, which is necessary to push forward the dragging device.

Another important drawback of such a known device is that, when it sticks, the only way to move it from the sticking position is to pull the guide wire to the opposite direction to the forward direction, thus risking to damage the device.

Another known device is disclosed by the international application WO1997042691A1, in which a shuttle actuated by an air flow is shown, to pull a dragging wire through a conduit, comprising a shaft having a head portion and a dragging portion holding an end of the dragging wire and a flow mitigation member, attached to the shaft, partially interrupting an air flow inserted in an inlet end of the conduit. It also show an air collector to receive the thrust, comprising a flexible membrane in the shape of a skirt having an end secured to the shaft and an opposite free end moving radially when the air is collected by the flexible membrane. This device also shows a set of air collection cells that are separated and arranged radially about the shaft, which inflate themselves under the action of the air flow, and which are made of fabric.

This known device has the following drawbacks.

In the embodiment comprising only the mitigation member, such device does not solve the sticking drawback set forth in the previous document, since the shaft would be free to incline itself with respect to the conduit axis, and the front end thereof, reaching in an inclined state the conduit inner surface, would risk to be inclined. In addition, the presence of openings to partially interrupt the flow causes a flow efficiency loss, thereby reducing the dragging strength.

This device attempts to overcome the above-mentioned problem of keeping the shaft parallel to the conduit to avoid the sticking, by mounting a collector comprising a skirt membrane, particularly complicating the device structure. In such case, the need to use a longer shaft comprising both the mitigation member shaft and the collector one prevents the device overcoming narrow curves, which device, instead, get stuck.

This membrane skirt of this device has also the same drawbacks of the above-described US patent, since, while the mitigation member is present, such skirt may turn forward, taking a shape that is substantially specular to the initial one and losing its ability to collect the air thrust.

Even where the collector of the above-mentioned known device comprises a plurality of air collection cells that inflate, they are made of fabric, thus highly weak, and not able to keep their shape when the air flow is not sufficient to inflate them, letting a high amount of the flow to escape, without using it, and not ensuring the alignment of the shaft parallel to the conduit axis. In such circumstance, the flow of the fluid escaping outwardly from between the cells formed by the different loops of the fabric composing them tends to crush them laterally, thus closing instead of opening them, thus this device, not being capable of substantially keeping its shape, does not ensure a suitable efficiency. Then, when the conduit length is very large, even of many hundred or thousand meters, the above-mentioned drawbacks of the known devices do not allow a sufficient use reliability.

Sometimes, during the travel thereof, it may be necessary to stop the dragging device and pull it back by some length, without withdrawing it, to make it subsequently restore its forward travel. The known devices do not allow this sequence of operations in a reversible manner, since some do not allow being pulled back, because they would stick, while other ones, when pulled back, would take such a configuration that would not allow them a further forward motion; still other ones would break or be damaged.

Another drawback of the known devices is that when they meet an obstacle, they do not allow identifying the position of such obstacle. In fact, the length of the wire inserted into the conduit, and thus the distance of the dragging device along the path of the conduit can be measured; but if the path of the conduit is not known, it is not possible to identify the position of the obstacle.

Therefore, due to the above-mentioned and other drawbacks, no one of the known devices allows an operation reliability that is sufficient to ensure the capability of running along conduits having a high length avoiding to be stuck, being capable of overcoming bottlenecks and narrow curves, and being able to be alternatively pulled back by a dragging wire and restore the forward stroke in a reversible manner even on short lengths.

The Applicant felt the need to propose a shuttle, a closure device, and a kit that provide a high operation reliability such as to allow running uninterruptedly along conduits that are long many hundred meters, up to many thousand meters, allowing a complete reversibility of the forward and backward motion without withdrawing the device from the conduit, and perfectly adapting to each bottleneck and to even very narrow curves of the conduit.

Therefore, the technical problem addressed by the present invention is to provide a dragging device, or shuttle, capable of overcoming the above-mentioned drawbacks of the prior art, ensuring a fast advancement of the shuttle in very long conduits, even of many hundred meters, avoiding of sticking along the path thereof.

Another object of the present invention is to provide a shuttle capable of overcoming even irregular bottlenecks and narrowings of the conduit, without losing thrust efficiency, avoiding pressurized air leakages between the shuttle and the conduit also at these irregularities.

A further object of the present invention is to provide a shuttle capable of overcoming narrow or irregular curves without losing thrust efficiency, avoiding pressurized air leakages between the shuttle and the conduit also at these irregularities.

Another object of the present invention is to provide a shuttle allowing constantly and automatically aligning the axis thereof with that of the conduit, so as to avoid the sticking.

Another object of the present invention is to provide a shuttle capable of being dragged, in a direction opposite to the forward direction thereof, applying a quite reduced tension to the dragging wire, avoiding damaging the shuttle.

A further object is to provide a shuttle capable of advancing in a forward direction and of being dragged in a direction opposite to the forward direction, in an alternative or repeated manner, in a simple manner, and avoiding do be damaged.

These and further objects and advantages are achieved by a shuttle as described in claim 1 and by a kit as described in claim 18.

Further objects, solutions, and advantages are present in the embodiments described herein below and claimed in the dependent claims attached herein

Different embodiments of the invention will be now described herein below through implementation examples, which are given by way of illustrative example only and in a non-limiting form, with reference particularly to the attached Figures, in which

Fig. 1 shows a perspective view in partial section of a shuttle according to the invention and of a closure device arranged within a length of a conduit and forming a kit for laying a guide wire in a conduit according to the invention;

Fig. 2 shows a sectional view with a longitudinal plane of a shuttle according to the invention and of a closure device forming a kit for laying a guide wire in a conduit according to the invention;

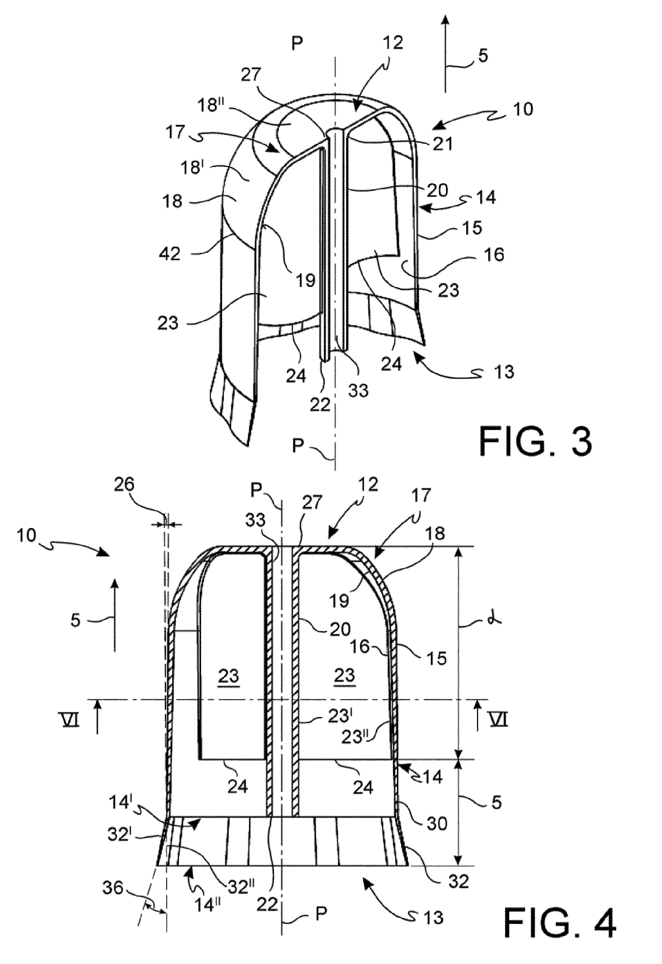

Figs. 3 and 4 show a partial sectional view of a shuttle by a plane passing through the longitudinal axis;

Fig. 5 shows a rear view of the shuttle;

Fig. 5A shows, in section with a longitudinal plane, a schematic view of a shuttle comprising elastic connecting means schematized by springs;

Fig. 6 shows a sectional view of the shuttle by a plane of section VI-VI orthogonal to the longitudinal axis;

Fig. 7 shows a rear view of the shuttle in a deformed configuration at a crushing of the conduit;

Fig. 8 shows a sectional view with a plane passing through the axis of the conduit, the shuttle, and the closure member, in which the shuttle is in a deformed configuration at a crushing of the conduit;

Fig. 9 shows a sectional view with a plane passing through the axis of the conduit, the shuttle, and the closure member when the shuttle is at a narrow curve of an irregular or damaged conduit;

Fig. 10 shows a shuttle in which the dragging wire is inserted in the through hole of the elongated member, and locked at the shuttle front end;

Fig. 11 shows a shuttle in which the dragging wire is replaced by an electric supplying and signaling wire of a video camera mounted at the shuttle front end;

Fig. 12 shows in section with a longitudinal plane the shuttle in a deformed configuration in which the rear projection faces outwardly of the sleeve portion during a return travel of the shuttle;

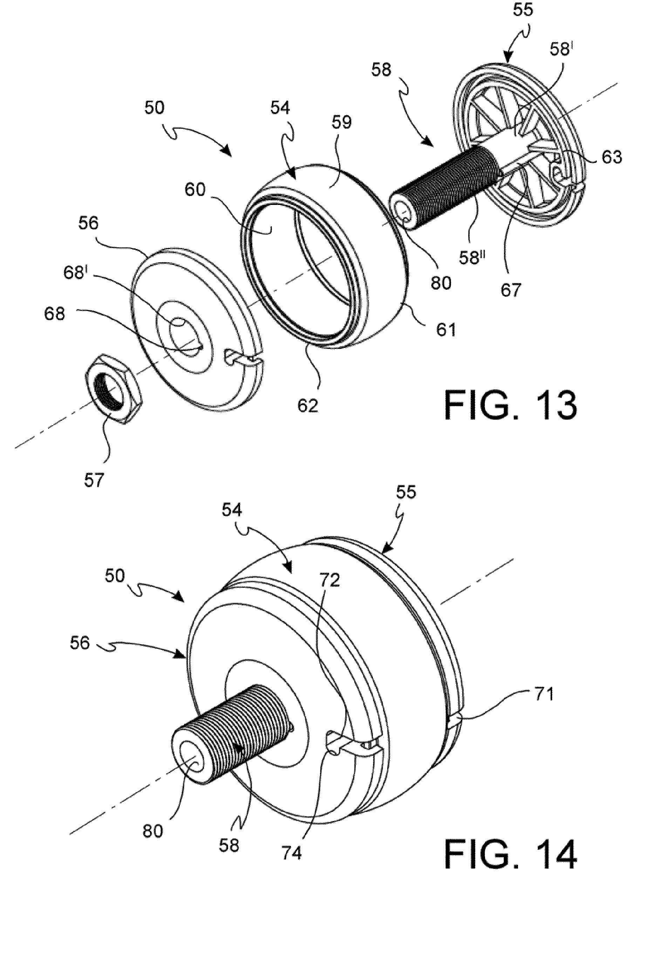

Fig. 13 shows an exploded drawing of a closure device according to the invention;

Fig. 14 shows a perspective view of the closure member of Fig. 13;

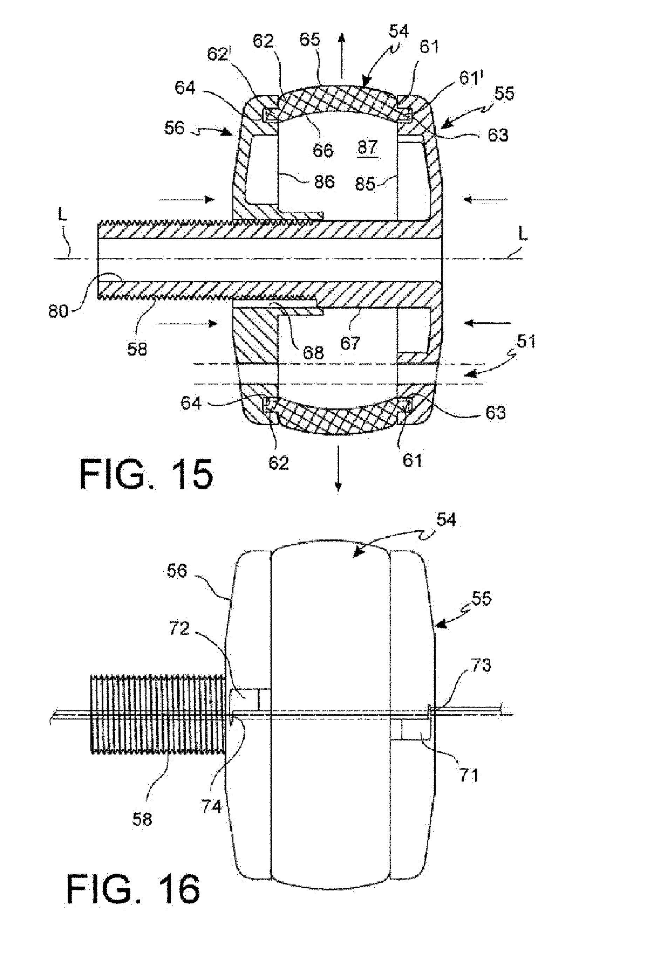

Figs. 15 and 16 show a closure device in section with a longitudinal plane and in a view, respectively;

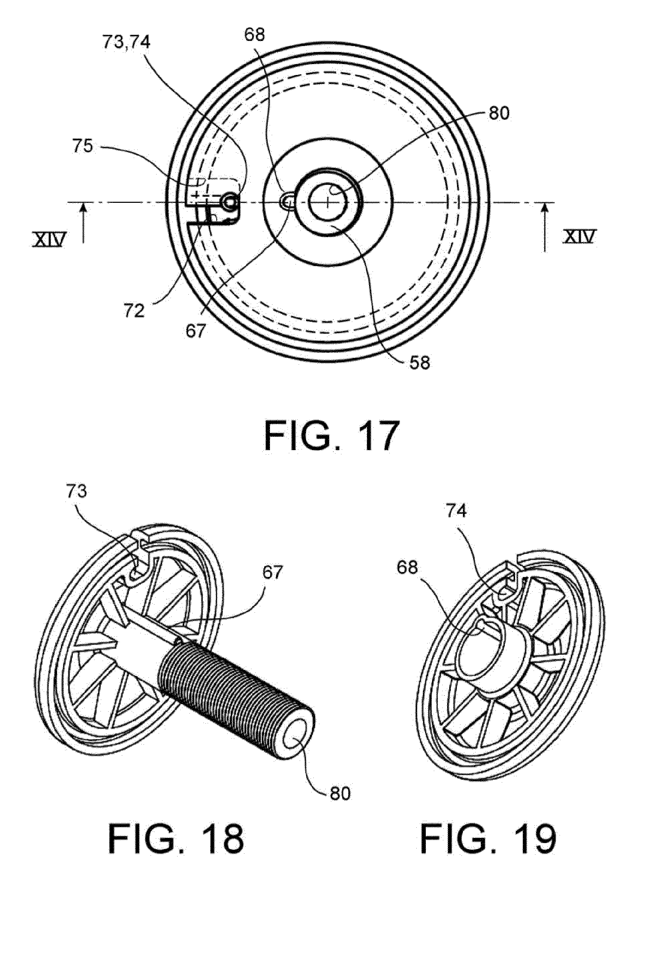

Fig. 17 shows a front view of the closure device;

Figs. 18 and 19 show in a perspective view the contrast members of the closure device.

Reference will be made herein below to a "shuttle" to mean a dragging body suitable to run along the conduit reacting to the thrust generated by a pressurized fluid inserted into the conduit at the first end. By "longitudinal" will be meant any direction parallel to the shuttle longitudinal axis. Reference will be further made to a "skirt" to mean a membrane portion of the shuttle extending about the longitudinal axis. Reference will be further made to "with shape continuity" to mean that two contiguous surfaces are mutually connected with continuity, without interruptions and without sharp edges. Reference will be made to a "dragging wire" to mean a wire suitable to be tied to the shuttle to be dragged into the conduit along the entire extent thereof in a first operative step, and subsequently tied to the cables to be dragged into the conduit so that, by dragging an end of the dragging wire, the other end thereof will be able to drag the cables. Therefore, the dragging wire may be formed by a small rope or cable having a tensile strength suitable to withstand the dragging tension of the cables into the conduit. The dragging wire has also to be of a reduced specific gravity, so as to oppose a reduced value of resistance to the shuttle forward motion. The terms "front" and "rear" are indicated with respect to the forward direction of the shuttle when it is pushed by the pressurized air flow along the conduit. By "axis of the conduit" is meant a line following the center of the cross sections of the conduit along the path thereof, therefore it may also be a curved line.

With reference to the Figures, a shuttle according to the invention is generally indicated by the reference 10. Such shuttle 10 has the function of allowing laying a dragging wire 4 in a conduit 100 by running along the conduit 100 from a first end 6 to a second end 8 according to a forward direction 5 dragging a free end of the dragging wire 4.

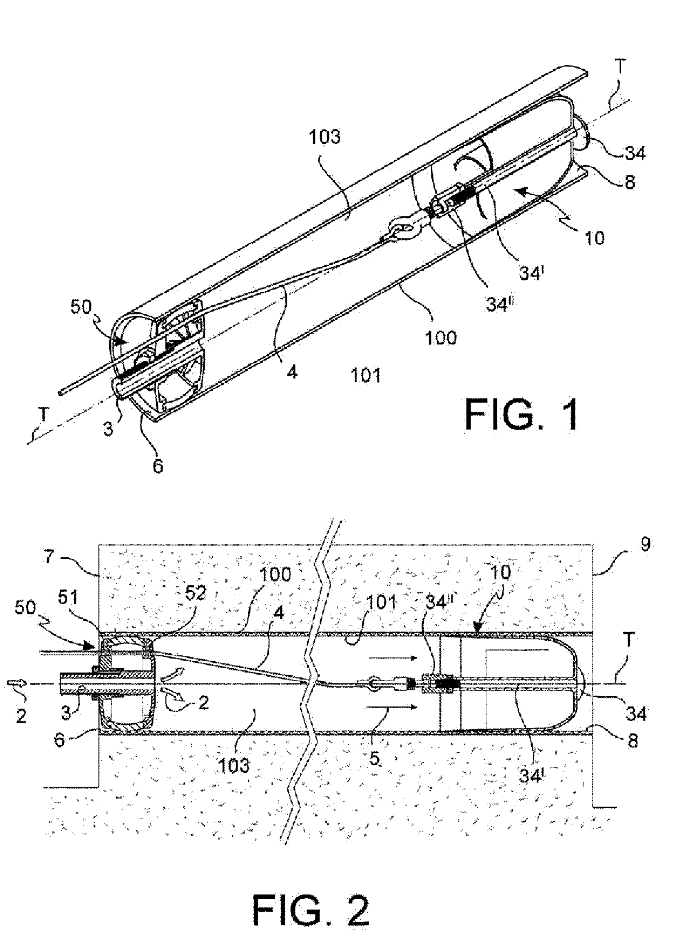

The shuttle is operatively pushed by a pressurized air flow 2 introduced at the first end 6 of the conduit 100. (Fig. 2)

The shuttle has a front end 12 and a rear end 13 arranged in the forward direction 5 of the shuttle 10.

In a general embodiment, the shuttle 10 comprises a sleeve portion 14 extending along a first longitudinal axis P-P.

The sleeve portion 14 is formed by a wall extending about the first longitudinal axis P-P, and it is defined by an outer side surface 15 and an inner side surface 16.

According to an embodiment, the sleeve portion 14 has a substantially cylindrical shape, having a substantially cylindrical outer surface 15, or, alternatively, slightly divergent towards the rear end 13 according to a first divergence angle 26. For example, the divergence angle ranges between 0° and 3°.

The shuttle 10 further comprises a front wall 17, for example, but not necessarily, which is externally convex, having an outer front surface 17 and an inner front surface 19 and it anteriorly closes the sleeve portion 14. Particularly, the outer side surface 15 of the sleeve portion may be connected with shape continuity with the outer front surface 18, avoiding a sharp edge or a step. In other terms, the outer side surface 15 is tangent to the outer front surface 18 along a connection line 47 therebetween.

The sleeve portion 14 and front wall 17 assembly forms a substantially glass- or bucket-shaped member.

In other terms, the sleeve portion 14 and front wall 17 assembly has an axial-symmetric shape.

The shuttle 10 further comprises an elongated member 20 arranged within the sleeve portion 14, having a second longitudinal axis C-C and engaging means 34 of the dragging wire 4 along said second longitudinal axis C-C.

The shuttle 10 comprises engaging means 34 of the dragging wire 4 to the elongated member along said second longitudinal axis C-C, in which such engaging means are suitable to receive a tension transmitted by the dragging wire.

The shuttle further comprises an elongated member 20 that is mobile between a rest position in which the second longitudinal axis C-C substantially coincides with said first longitudinal axis P-P, and a displaced position under the action of the stress by said tension, in which said second longitudinal axis C-C is displaced with respect to the first longitudinal axis.

The shuttle comprises elastic connecting means 23 connecting the elongated member 20 to the sleeve portion 14 transversally to the elongated member 20, so as to exert a self-aligning elastic force F, acting between said elongated member 20 and said sleeve portion 14 to bring said elongated member 20 back to said rest position, said sleeve portion 14 reacting by shifting to the opposite direction.

Furthermore, the elongated member 20 may have a first end 21 connected to the front wall 17 along the first longitudinal axis P-P and a second free end 22 transversally mobile with respect to the first longitudinal axis P-P from a rest position in which said end 22 is arranged on the first longitudinal axis P-P to a position transversally displaced with respect to the first longitudinal axis P-P when it is stressed with a force N transversal to the second longitudinal axis C-C exerted by the tension T of the dragging wire 4.

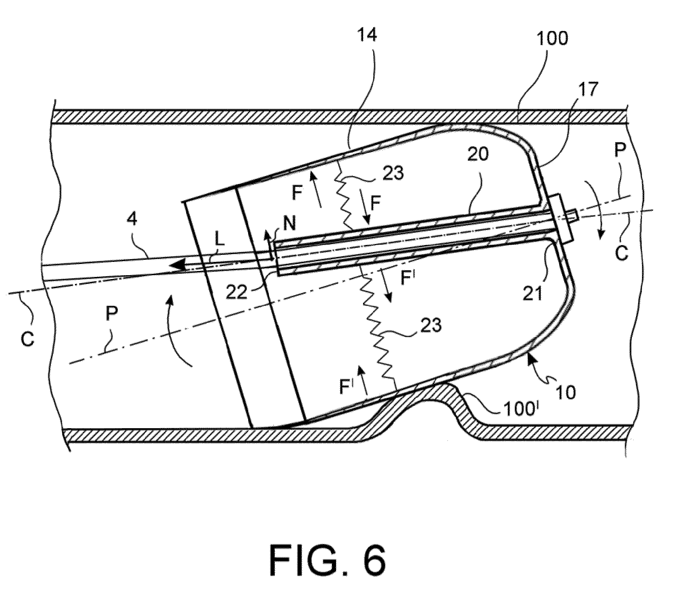

In other terms, the shuttle is configured to allow the elongated member free end 22 moving from the first longitudinal axis P-P of the sleeve portion 14, for example, allowing the elongated member 20 inclining with respect to the sleeve portion 14. (Fig. 6)

According to a possible embodiment, in fact, the front wall 17 is made of an elastically deformable material, and the first end 21 of the elongated member 20 is secured to said front wall 17. In such a manner, the second longitudinal axis C-C of the elongated member 20 may be inclined with respect to the first longitudinal axis P-P of the sleeve portion 14, particularly by virtue of the front wall 17 deformability.

As shown in Fig. 6, the shuttle 10 further comprises elastic connecting means 23 connecting the elongated member 20 to the sleeve portion 14 in a direction transversal to the second longitudinal axis C-C, which are suitable to exert elastic forces F, F' for self-aligning the sleeve portion 14 with respect to the elongated member 20 when the second end 22 is in said displaced position to align the first longitudinal axis P-P with the second longitudinal axis C-C. The self-aligning forces generate a self-aligning torque A, which tends to bring the shuttle back to the proper orientation to avoid sticking.

In this regard, Fig. 6 shows a schematic view of a shuttle as described above, shown in a deformed configuration in which the free end 22 of the elongated member 20 is moved with respect to its rest position. The shuttle 10 comprises elastic connecting means 23 acting between the elongated member 20 and the sleeve portion 14 by the forces F and F'.

The second longitudinal axis C-C of the elongated member is shown in an inclined position with respect to the first longitudinal axis P-P. In such configuration, the shuttle has met an obstacle along the conduit, which caused the inclination thereof with respect to the conduit axis. In this configuration, the dragging wire 4 applies a force N to the free end 22 of the elongated member 20 in a direction transversal to the elongated member 20 axis, and, at the same time, the forces F and F' tend to rotate the first longitudinal axis P-P of the sleeve until aligning it with the elongated member 20 axis, tending to align the sleeve portion axis to the conduit axis, allowing the shuttle overcoming the obstacle 100', thereby avoiding the sticking thereof at the obstacle 100'.

In other terms, the shuttle 10 comprises radial connection means 23 connecting at least one portion of said elongated member 20 with at least one portion of the inner side surface 16. These connection means 23 may be extended and are elastically compressible in the radial direction with respect to the longitudinal axis P-P. In such a manner, such connection means 23 allow the elastic deformation of the sleeve portion 14 when the shuttle meets a crushing of the conduit or at a narrow curve, while allowing keeping the shuttle longitudinal axis P-P in a position substantially parallel to the forward direction thereof, and thus in a direction substantially parallel to the conduit T-T axis. In other terms, the radial connection means 23, when the shuttle tends to be inclined with respect to the conduit axis due to obstacles or other hindrances, immediately cooperate to straighten the shuttle with respect to the conduit axis, avoiding the sticking of the shuttle.

The reason why the radial connection means cooperate to straighten the shuttle when it tends to be inclined with respect to the conduit axis will be explained herein below.

As shown in Fig. 6, and as disclosed above, the radial connection means 23 may be schematized by a plurality of compression/traction springs, arranged radially between the elongated member 20 and the sleeve portion 14. When the shuttle is located with the axis P-P thereof in a position parallel to the conduit T-T axis, all the springs are in equilibrium and hold the shuttle in this position.

On the contrary, when the shuttle is inclined with respect to the conduit axis, the guide wire 4 applies to the rear end 22 of the elongated member 20 a wire tension component, orthogonal to the conduit axis, tending to align the elongated member 20 with the conduit T-T axis. In this configuration, the elongated member 20 is aligned with the conduit T-T axis, while the sleeve portion 14 turns out to be inclined with respect to the conduit T-T axis, therefore some of the connection means, schematized by springs, are compressed, while other ones arranged on the opposite side are stretched. The resultant of the elastic forces exerted by such connection means in the radial direction rotate the sleeve portion, thus bringing it back to the coaxial position with the elongated member.

In accordance with an embodiment, the sleeve portion 14 is made of an elastically deformable material so as to be able to deform from a cylindrical configuration 10' at rest to a compressed configuration 10" in the direction transversal with respect to the first longitudinal axis P-P, so that the diameter thereof in a first direction Q is reduced compared to that of the cylindrical configuration, and, in a second direction R, it is elongated compared to that of the cylindrical configuration, said plurality of membranes 23 consequently elastically deforming.

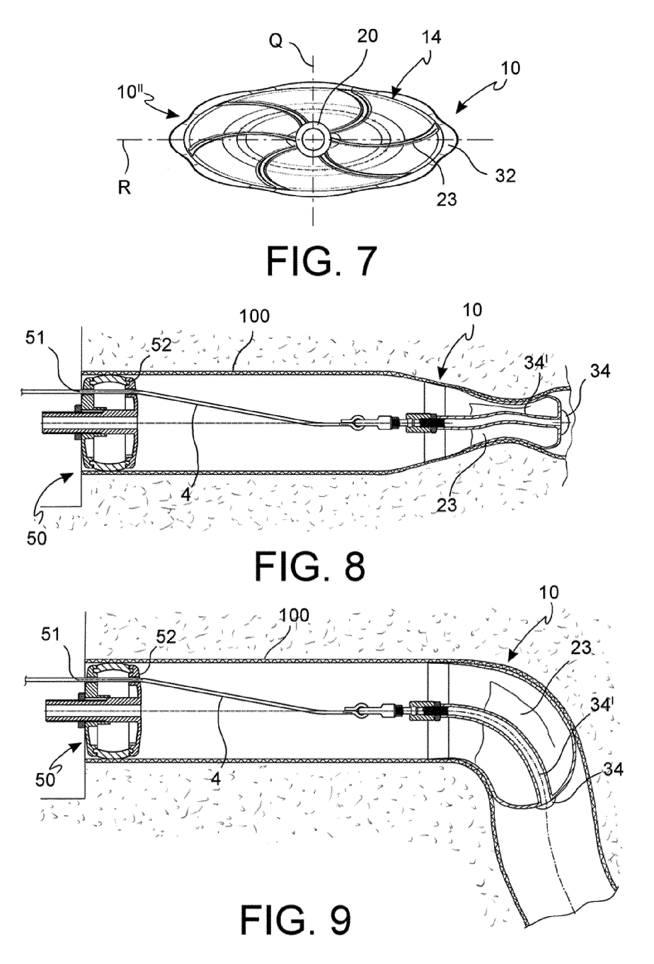

The connection means 23 are so configured as to allow the above-mentioned deformation of the sleeve portion 14. In other terms, the connection means 23 are so configured as to be able to extend and shorten in the radial direction to allow the deformation of the sleeve portion 14. As shown in Fig. 7, in the deformed, or compressed, configuration of the shuttle, the connection means 23, or the membranes 23, are elongated in a first direction R and shortened in a second direction Q orthogonal to the first one.

According to a preferred embodiment, the connection means 23 comprise a plurality of membranes 23, having a first side secured to the elongated member 20 and a second side secured to the inner side surface 16.

Such membranes are made of an elastically deformable material, for example, silicone.

Such membranes also comprise a free edge 24 facing the shuttle 10 rear end.

According to an embodiment, at least two of said membranes 23 extend in a direction parallel to the longitudinal axis P-P starting from the inner front surface 19 up to said free edge 24, defining at least two elongated cells 25 that are anteriorly closed and posteriorly open.

According to another embodiment, all the membranes 23 extend in a direction parallel to the longitudinal axis P-P, starting from the inner front surface 19 up to said free edge 24, defining a plurality of elongated cells 25 that are anteriorly closed and posteriorly open, arranged radially about the elongated member 20.

According to an embodiment, to each membrane 23 an opposite membrane 23 corresponds, symmetrically arranged with respect to the longitudinal axis, arranged so that said membranes 23 exert opposite elastic forces between the sleeve portion 14 and the elongated member 20.

In accordance with an embodiment, at least one of the membranes 23 of said plurality has a first side connected to the elongated member, and a second side connected to the inner side surface 16 along an intersection line with a plane passing through the longitudinal axis P-P.

According to an embodiment, at least one membrane 23 of the plurality of membranes has a first side secured to the elongated member, and a second side secured to the inner side surface 16 along an intersection line with a plane passing through the longitudinal axis (P-P).

Particularly, the section with a plane (VI-VI) orthogonal to the longitudinal axis (P-P) of at least one membrane (23) of said plurality of membranes has a curved profile (28).

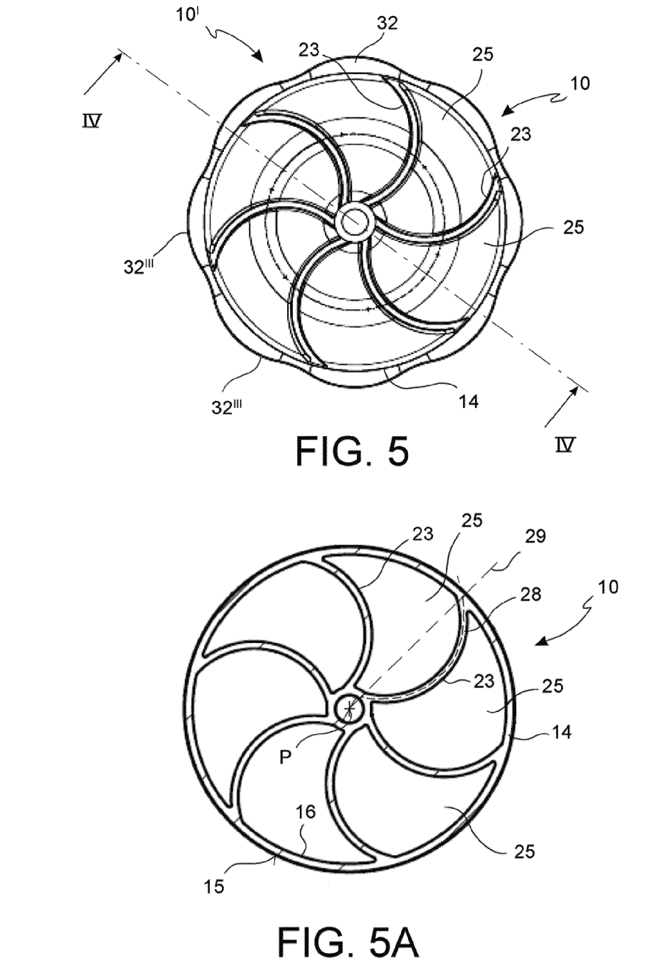

According to a preferred embodiment, at least one membrane (23) of said plurality is configured according to a cylindrical surface portion with an axis parallel to the longitudinal axis, as shown in Figs. 5 and 6.

For example, but not necessarily, the section with a plane VI-VI orthogonal to the longitudinal axis P-P of at least one membrane 23 of said plurality of membranes has a semicircle profile 28 arranged at a preset side with respect to a radius of a circumference with center on the longitudinal axis P-P.

For example, all the membranes 23 have a shape that is substantially the same, and are circumferentially arranged uniformly about the elongated member 20, forming a plurality of closed cells, substantially mutually identical, suitable to receive the thrust of the pressurized air 2.

According to an embodiment, such membranes 23 are, for example, but not necessarily, in a number of 6, forming 6 substantially identical cells.

For example, but not necessarily, the outer front surface 18 comprises at least one spherical portion 18'.

According to an embodiment, the outer front surface 18 comprises a transversal flattening 18" to the first longitudinal axis P-P.

In accordance with an embodiment, the outer front surface comprises a beveled joint between said at least one spherical portion 18' and said flattening 18".

In accordance with an embodiment, the sleeve portion 14 is made of an elastically deformable material. In such a manner, such sleeve portion 14 is capable of deforming to adapt to the inner shape 101 of the conduit to be run along.

For example, but not necessarily, the sleeve portion 14 is made of silicone. In such a case, the pressurized air flow 2 that is collected by the shuttle slightly inflates the sleeve portion 14, thus promoting the air sealing between the shuttle and the conduit.

In accordance with an embodiment, the elongated member is made of an elastically flexible material so as to adapt to the passage through narrow curves of the conduit 100.

According to an embodiment, the elongated member 20 is a tubular member that has an inner axial hole 33 open at both ends 27, 22 of the tubular member and communicating with the outside both at the shuttle front end 12, and at the shuttle rear end 13.

Such hole 33 is suitable to pass an end of the dragging wire 4 therein, to secure it to the elongated member 20 by said engaging means 34.

In such a case, the engaging means 34 of the dragging wire 4 to the elongated member comprise a stop block 34 secured to the free end of the dragging wire 4, the dragging wire being preventively inserted through the axial hole 33, said stop block 34 ending in abutment on the outer front surface 18 at the end opening 27.

According to a possible embodiment, the engaging means 34 comprise a pin 34' ending with an enlarged head 34 suitable to engage in abutment on said outer front surface 18, said pin being inserted in the inner axial hole 33 until projecting a threaded portion through the opening of the elongated member 20 at the free end 22 thereof, a connecting loop 34" being connectable to said threaded portion. For example, the pin 34' is made of a flexible material so as to allow the elastic deformation of the elongated member 20.

According to an alternative embodiment, the elongated member 20 is formed within the thickness of the membranes 23 and in the intersection of all the membranes 23 at the second longitudinal axis C-C. In such a case, the elongated member 20 avoids having an axial through hole 33. In such a case, the dragging wire securing means are located at the elongated member 20 free end 22.

In accordance with a preferred embodiment, the thicknesses of the front wall 17, the sleeve portion 14, and the membranes 23 are so configured that the shuttle has a gradually decreasing deformability starting from a central area 27 of the front wall 17 up to the rear end 13.

In accordance with an embodiment, the thickness of the front wall 17 and of the sleeve 14 are gradually decreasing starting from a central area 27 of the front wall 17 up to the rear end 13.

According to a preferred embodiment, the sleeve portion 14 comprises a tail length 30 having a preset length s, posteriorly projecting in a direction parallel to the longitudinal axis P-P with respect to the connection means 23, or to said free edge 24 of said plurality of membranes 23, up to the shuttle rear end 13.

The above-mentioned tail length is made of an elastically deformable material, and preferably, but not necessarily, obtained as a single piece with the remaining part of the sleeve portion 14.

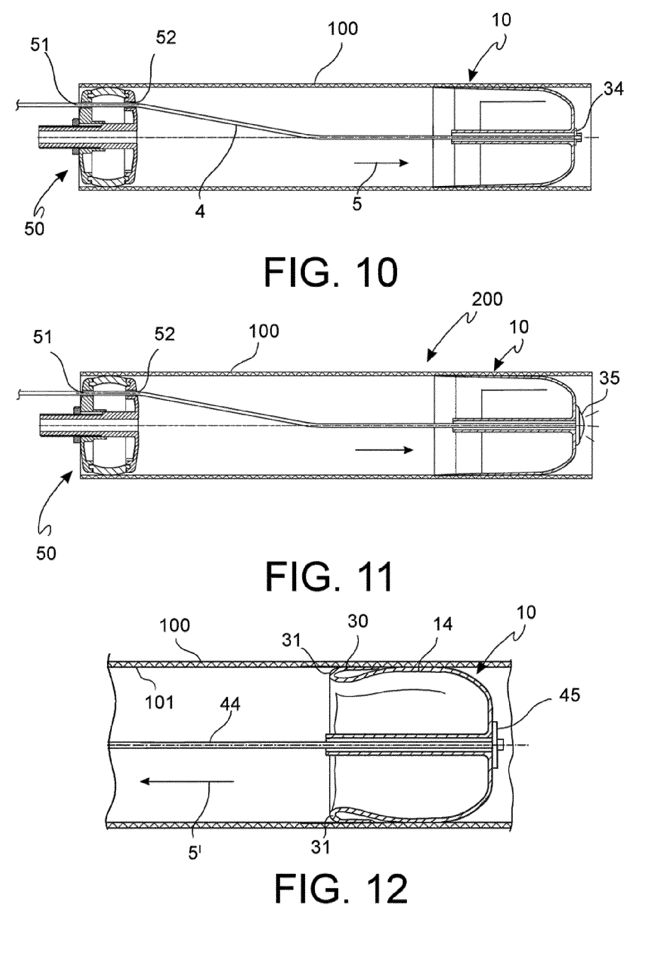

The length s is selected so as to allow outwardly folding such tail portion 30 about the sleeve portion 14 when the shuttle 10 is pulled in a direction opposite the forward direction 5 by the dragging wire 4, thereby providing a rounded guide surface 31 to allow the backward motion 5' of the shuttle 10. Such a behavior is shown in Fig. 12.

If, for any reasons, in fact, it would be necessary to stop the shuttle and drag it in an opposite direction 5' to the forward direction 5, the tail portion 30 free end would be hold by the friction with the conduit inner surface; therefore, it would face outwardly of the outer surface 15 of the sleeve portion, as shown in Fig. 12.

In this configuration, a curved pilot surface 31 would be formed between the sleeve portion 14 and the turned over tail length 30, promoting the dragging of the shuttle in an opposite direction 5' to the forward direction 5.

In accordance with an embodiment, the sleeve portion 14 ends posteriorly with a sealing skirt 32 suitable to deform more than the sleeve portion 14 or the tail portion 30.

Particularly, the sealing skirt 32 is divergent posteriorly with respect to the outer side surface 15 of the sleeve portion 14 according to a preset divergence angle 36, so as to drag on an inner surface 101 of the conduit 100.

Particularly, the sealing skirt 32 may have a section with a plane passing through the first longitudinal axis (P-P), which is tapered towards the rear end (13) starting from the thickness (14') of the sleeve portion (14), or the tail portion (30), ending posteriorly with a sharp edge (14"). In other terms, the sealing skirt 32 wears thin starting from an attachment portion to the sleeve or the tail portion up to the rear end 13.

According to an embodiment, the sealing skirt 32 defines an outer conical surface 32' and an inner conical surface 32", intersecting along a line forming the sharp edge 14".

In accordance with an embodiment, such outer conical surface 32' and said inner conical surface 32" are corrugated. In other terms, the outer conical surface 32' and the inner conical surface 32" are defined by varying in an even alternated manner the opening angle thereof.

In other terms, the sealing skirt 32 ends posteriorly with a rimmed edge comprising a plurality of loops 32"'. For example, but not necessarily, the rimmed edge comprises a number of loops 32" other than the number of the membranes 23.

The presence of the rimmed edge involves the advantage of promoting the sealing ability, since it is more deformable than the remaining part of the shuttle 10. Furthermore, when the shuttle is dragged in a direction opposite the forward direction, such a configuration promotes the adhesion to the conduit inner surface, and therefore the turning outwardly of the tail portion 30.

In accordance with an embodiment, the front wall 17 has an outer surface 18 that is suitably shaped to receive an engaging member 34 for the dragging wire 4, said wire 4 being inserted through the axial hole 33 of the tubular member 20.

According to a particular embodiment, the front wall 17 has an outer surface 18 that is suitably shaped to receive an electronic vision device 35 supplied via an electric cable 44 inserted through the axial hole 33 of the tubular member 20.

In accordance with an embodiment, the shuttle is made of a material that is elastically flexible and capable of elastically maintaining its shape so as to be guided through the conduit while keeping the longitudinal axis P-P parallel or tangent to the forward direction 5.

According to a preferred embodiment, the whole shuttle 10 is formed in a single piece with the same elastic material, the whole shuttle 10 thus turning out to be elastically deformable.

In other terms, in accordance with an embodiment, the front wall 17, the sleeve portion 14, the membranes 23, the elongated member 20, the tail portion (30), and the sealing skirt 32 are all formed together in a single piece from the same elastically deformable material.

A behavior of the shuttle 10 is shown in Fig. 8, which shuttle is entirely made of an elastically deformable material, when it passes through an irregular bottleneck of the conduit 100. In fact, the shuttle 10 deforms, adapting the sleeve portion, particularly the sleeve portion outer surface, to the irregular shape of the bottleneck, ensuring an excellent seal of the air pressure, which is able to continue pushing the shuttle 10 with the maximum efficiency and without leakage losses. The membranes 23 and the elongated member also accordingly deform.

Another behavior of the shuttle at a narrow curve is shown in Fig. 9. The sleeve portion 14 deforms according to the conduit inner surface, ensuring a seal against the pressure loss of the air flow suitable to push the shuttle and, at the same time, also the membranes 23 accordingly deform. In the embodiment shown in the figure, also the elongated member 20 accordingly deforms.

An embodiment is shown in Fig. 10, in which the dragging wire is directly inserted through the axial hole 33 of the elongated member 20, and anteriorly projects from the hole front end. The projecting part of the wire is secured with a small stop block, for example, a small cylinder with a central hole through which the wire end has to be passed, and a transversal through hole in which a securing screw is screwed.

As shown in Fig. 11, according to another aspect of the invention, a visual inspection device 200 of a conduit 100 is provided, comprising a shuttle as described above, and a video camera 35 mounted on the front wall 17 at the front end 12 of the shuttle 10.

According to a possible embodiment, the tubular elongated member 20 comprises an enlarged front end portion having an inner diameter that is larger than the inner diameter of a remaining portion of the elongated member 20. Such enlarged portion is configured to house the visual inspection device or video camera.

The video camera may require an electric cable for supplying and transmitting a signal comprising the detected visual data. In such a case, the dragging wire may be replaced with the above-mentioned electric cable. Particularly, the electric cable is inserted through the axial hole of the elongated member 20 and connected to the video camera 35 mounted at the shuttle front end.

Alternatively, supply means may be provided, integral with the shuttle and optionally, in addition, airwave transmission means of the signal. In such a case, an electrical cable may not be needed, and the same dragging cable 4 as described above would be used.

The shuttle 10 may further be provided with identification means of the position thereof in the conduit, when the conduit is not visible, for example, it is buried, comprising transmitting means and receiving means of a signal. For example, an ultrasound transmitter may be associated to the shuttle, while a receiver may be operated on the ground until it identifies the transmitter position. For example, at least one part of said means is mounted on the shuttle externally to the front end thereof, for example at the elongated member first end.

According to an embodiment, such transmitting means comprise a heat source, for example, an electric resistor, and said receiving means comprise a heat gun capable of perceiving the heat produced by the heat source.

According to a possible embodiment, the heat source is secured to the dragging wire at a preset distance from the shuttle, for example at the distance of one meter.

According to another aspect of the present invention, the above-mentioned objects and advantages are achieved by a closure device 50 of a conduit 100 to form a closed length 103 defined by said closure device 50 mounted at a first end 6 of the conduit and by a shuttle 10 slidably inserted into said conduit 100, said shuttle 10 being pushed towards a second end 8 of the conduit opposite the first end by a pressurized air flow 2 introduced in said closed length 103 through said closure device 50.

Such closure device 50 comprises an elastic sealing member 54 having a substantially cylindrical tubular shape having a first base end 61 and an opposite base end 62, said sealing member 54 defining a longitudinal axis L-L.

Such device 50 further comprises a first compression member 55, for example, in the shape of a disc, couplable to said first end 61, and a second compression member 56, for example, in the shape of a disc, couplable to said second end.

The first and the second compression members have an outer edge so configured as to be able to be inserted within the conduit 100, particularly, they have an outer edge repeating the shape of the internal section of the conduit 100 in a direction transversal to the conduit 100 axis.

The closure device 50 also comprises compression means connected to said compression members 54 and 55, which are suitable to compress said sealing member 54 between said first compression member 55 and said second compression member 56, so that the sealing member 54 deforms by radially expanding outwardly, thus increasing the diameter thereof and creating a seal with an inner surface of the conduit.

Furthermore, the closure device 50 has a pressurized air inlet 80 through the closure device 50 and a through opening 51 through the closure device 50 to allow the passage of the dragging wire.

According to an embodiment, the sealing member 54 has an outwardly convex outer surface 59 and/or an inwardly concave inner surface 60, so that, when the sealing member 54 is compressed between the first compression member 55 and the second compression member 56, said sealing member 54 has a preferred outwardly deformation configuration.

In other terms, the sealing member 54 has a section with a longitudinal plane formed by an outwardly arched portion.

In still other terms, the sealing member extends about a surface that is cylindrical and radially outwardly convex.

In further terms, the sealing member 54 is defined by the outwardly rotation of an arched section about the longitudinal axis L-L.

According to an embodiment, the sealing member has an annular shape.

Such a shape facilitates the outward deformation of the sealing member so as to act with force against the conduit inner surface and to obtain a very efficient seal. Furthermore, the sealing member, being elastically deformable, adapts itself to small imperfections of the conduit inner surface.

According to an embodiment, at least one of the first base end 61 and the second base end 62 comprise a second projecting small annular edge 62'.

According to another embodiment, the first base end 61 comprises a projecting small annular edge 61', and said second base end 62 comprises a second projecting small annular edge 62'.

The first compression member 55 and the second compression member 56 may comprise, respectively, a first annular groove 63 and a second annular groove 64 that are so configured as to receive said first and second small edges 61', 62', respectively.

This provision allows holding the sealing member 54 base ends in place, also during the compression exerted by the compression members 55 and 56.

In accordance with an embodiment, the compression means 55 and 56 comprise a tubular connection member 58 having a first end 58' orthogonally and centrally secured to the first compression member 55, and a second threaded end 58".

Furthermore, the second compression member 56 may comprise a central through hole 68' slidably couplable in the longitudinal direction with said connection member 58, said second compression member 56 being able to be brought near to the first compression member 55 by screwing a nut 57 to said second threaded end 58".

In other terms, the compression members 55 and 56 are slidably mutually connected according to the longitudinal axis L-L.

Furthermore, the compression members 55 and 56 comprise respective mutually operatively facing and parallel inner faces 85 and 86.

Therefore, the compression members 55 and 56 are slidably mutually connected so as to bring the inner faces 85 and 86 near or to move them away in a direction perpendicular to the same faces.

Particularly, the compression members 55 and 56 mutually define a free space 87 defined by said faces 85 and 86 and the inner surface 66 of the sealing member 54. Particularly, the free space 87 has a volume that varies as the relative distance between the compression members 55 and 56 varies, as measured along a direction parallel to the longitudinal axis L-L.

The through opening 51 is so configured as to allow the dragging wire operatively passing through the free space 87.

Advantageously, the dragging wire 4 passes within the sealing means 54, particularly having an annular shape.

Advantageously, the pressurized air inlet 80 is formed by a longitudinally through hole 80 of the tubular connection member 58.

In other terms, the through hole 80 allows inletting or forcedly inserting the pressurized air into the conduit, at a first end 6 thereof.

According to an embodiment, the through opening 51, comprises a first hole 73 passing through the first compression member 55, and a groove 71 passing through said first compression member 55, that is open radially outwardly and starting from said first hole 73.

Furthermore, the opening 51 may comprise a second hole 74 passing through said second compression member 56, and a groove 72 passing through said second compression member 56, which is open radially outwardly and starting from said second hole 74.

In other terms, the grooves 71 and 72 extend starting from an outer edge of the compression members 55 and 56 until reaching the corresponding hole 71 or 72.

The grooves 71 and 72 the insertion dragging wire 4 in the transversal direction starting from outside of the compression members 55 and 56 until reaching the corresponding holes 73 and 74. At the same manner, they allow withdrawing the dragging wire 4 in the transversal direction to the longitudinal axis L-L.

According to an embodiment, the grooves 71 and 72 have a constant width as measured along a plane orthogonal to the longitudinal axis L-L.

Advantageously, the first hole 73 and the second hole 74 are arranged so as to be operatively mutually alignable to allow the dragging wire 4 passing longitudinally through the closure device 50.

In other terms, each compression member 55 and 56 comprises a hole 73 or 74 having a diameter configured to allow the passage of the dragging wire 4, avoiding the leakage of the pressurized air inserted in the tube. Particularly, the diameter of the holes 73 and 74 is slightly larger than the dragging wire 4 diameter.

According to an embodiment, the first groove 71 and the second groove 72 are not operatively mutually aligned. In other terms, the grooves 71 and 72 are configured such that they do not mutually face when the compression members 55 and 56 are mounted together.

This provision involves the advantage that, once the guide wire is in its operative position, passing through the holes 73 and 74, it cannot exit inadvertently such holes. In other terms, the grooves 71 and 72 operatively hold the guide wire 4 in a direction transversal to the longitudinal axis L-L, and allow at the same time the free sliding of the guide wire 4 in a direction parallel to the longitudinal axis L-L.

For example, but not necessarily, the grooves 71 and 72 are configured in a "L" shape, having a first length parallel to the radius of the compression member 55 and 56, and a second length connecting with the hole 73 or 74, orthogonal to the first length. In other terms, the first lengths of the two grooves 71 and 72 are operatively mutually parallel, and also to a radius of the compression members, while the second lengths are mutually aligned.

According to an embodiment, the closure device 50 comprising reference means between the first compression member 55 and the second compression member 56, so that, operatively, the first compression member 55 and the second compression member 56 are kept mutually aligned in the angular direction so that the first hole 73 and the second hole 74 are mutually aligned.

According to an embodiment, the above-mentioned reference means comprise a reference profile 67 laterally projecting from said tubular member 58, and a complementary groove 68 obtained in the central through hole 68' of the second compression member 56.

In such a manner, the second compression member 56 is forced to be mounted in only one preset angular position with respect to the first compression member 55, so that the first hole 73 remains aligned with the second hole 74 in use.

According to a possible embodiment, the sealing member 54 is made of silicone.

According to a possible embodiment, the first and/or the second compression member 55, 56 is obtained in a plastic material, particularly a polymeric material, or in a metal material.

According to a further aspect, the above-mentioned objects and advantages are achieved according to the present invention by means of a kit for laying a dragging wire 4 in a conduit 100 by a pressurized air flow 2 introduced in said conduit 100, comprising a shuttle 10 as described above, and a closure device 50 as described above.

The above-mentioned kit may comprise, in addition, a connection device between an outlet end and an inlet end of two respective conduits arranged in sequence.

For example, such device may comprise a connection tube having two opposite ends, which are sealingly engageable to an outlet end of a first conduit and to an inlet end of a second conduit, respectively, arranged in sequence with respect to the first conduit.

Each of said opposite ends of said connection tube comprises a respective coupling member to said respective outlet end or inlet end.

According to a further aspect of the present invention, the above-mentioned objects and advantages are achieved by a system for laying electric cables in buried conduits, between a first end 6 and a second end 8 of the conduit 100, comprising:
- a shuttle 10 as described above, suitable to run along the conduit 100 from the first end 6 to the second end 8 of the conduit 100 dragging the dragging wire 4;
- a closure device 50 as described above, mounted at the first end 6 of the conduit 100, or to any other removable closure device applicable to a conduit free end, which is suitable to the present object;
- means to obtain pressurized air to be flown in the conduit 100 through said inlet opening 80 of said closure device;
- means for dragging a second end of the dragging wire 4, while a first end of the cables to be laid in the conduit 100 was tied to the first end of the dragging wire 4.

To the above-described preferred implementation solution of the device, those of ordinary skill in the art, to the aim of meeting contingent, specific needs, will be able to make a number of modifications, adaptations, and replacements of elements with functionally equivalent other ones, without anyhow departing from the scope of the following claims.

Particularly, the shuttle 10 according to the invention may be also used together with any prior art closure device different from the one described in the present description.

Furthermore, the kit according to the invention may comprise the shuttle 10 according to the invention and a different closure member belonging to the prior art.

For example, the kit according to the invention, alternatively to the above-described closure device, may comprise any known closure device configured to be mounted at a conduit end.

## Claims

1. A shuttle (10) for laying a dragging wire (4) in a conduit (100) suitable to be pushed along a conduit (100) by a pressurized fluid that is introduced downstream of said shuttle (10) to run along the conduit (100) from a first end (6) to a second end (8) thereof according to a forward direction (5), said shuttle having a front end (12) and a rear end (13) with respect to said forward direction (5), said shuttle comprising:
- a sleeve portion (14) defining a first longitudinal axis (P-P)
- a front wall (17) anteriorly closing said sleeve portion (14)
- an elongated member (20) extending within the sleeve portion (14) along a second longitudinal axis (C-C);
- engaging means (34) of the dragging wire to the elongated member along said second longitudinal axis (C-C), said engaging means (34) being suitable to receive a tension transmitted by the dragging wire;
- wherein said elongated member (20) is mobile between a rest position, in which said second longitudinal axis (C-C) substantially coincides with said first longitudinal axis (P-P), and a displaced position in which said second longitudinal axis (C-C) is displaced with respect to the first longitudinal axis;
- elastic connecting means (23) connecting the elongated member (20) to the sleeve portion (14) transversally to the elongated member (20) so as to exert an elastic self-aligning force (F) to bring the elongated member (20) from the displaced position back to the rest position, said sleeve portion (14) reacting by moving in the opposite direction.

2. The shuttle according to claim 1, wherein the front wall (17) is made of an elastically deformable material, and wherein a first end (21) of the elongated member 20 is optionally secured internally to said front wall (17).

3. The shuttle according to claim 1 or 2, wherein said connection means comprise at least one membrane (23) made of elastic material, having a first longitudinal side (23') secured to the elongated member (20), a second longitudinal side (23") secured to said sleeve member (14), and at least one free edge (24) facing the shuttle (10) rear end (13).

4. The shuttle according to claim 3, wherein said connection means comprise a plurality of membranes (23) arranged in a manner mutually diametrically opposite with respect to the elongated member (20), so that they operatively exert mutually aligned elastic forces between the elongated member (20) and the sleeve portion (14).

5. The shuttle according to the claims 3 or 4, wherein said membrane (23) or at least one membrane (23) of said plurality is configured according to a cylindrical surface portion with an axis parallel to the longitudinal axis.

6. The shuttle according to at least any of the preceding claims, wherein the sleeve portion (14) is made of an elastically deformable material so as to be able to deform from a substantially cylindrical configuration (10') when at rest, to a compressed configuration (10") in the direction transversal with respect to the first longitudinal axis P-P, so that the diameter thereof in a first direction (Q) is reduced compared to that of the cylindrical configuration, and, in a second direction (R), it is elongated compared to that of the cylindrical configuration, said plurality of membranes (23) elastically deforming accordingly.

7. The shuttle according to any of the claims 2 to 6, wherein at least two of said membranes 23 extend starting from an inner front surface (19) of the front wall (17) up to said free edge (24), defining at least two elongated cells (25) that are anteriorly closed and posteriorly open.

8. The shuttle according to any of the preceding claims, wherein an outer front surface (18) of the front wall (17) is anteriorly convex outwardly and is connected with shape continuity to an outer side surface (15) of the sleeve portion (14) along a closed line (47), and/or wherein said outer side surface (15) is slightly divergent towards the rear end (13) according to a first preset of divergence angle (26).

9. The shuttle (1) according to any of the preceding claims, wherein the thicknesses of the front wall (17) and the sleeve (14) wall are gradually decreasing starting from a central area (27) of the front wall (17) up to the rear end (13).

10. The shuttle according to at least one of the preceding claims, wherein the sleeve portion (14) comprises a tail length (30) posteriorly projecting by a preset length (s) measured between a rear end (24) of the connection means (23), or of said free edge (24) of said plurality of membranes (23), up to the rear end (13) of the shuttle (10), said tail length being elastically deformable and said length (s) being selected so as to allow folding outwardly such tail length (30) around the sleeve portion (14) when the shuttle (10) is pulled in a direction opposite the forward direction (5) by the dragging wire (4), thereby providing a rounded guide surface (31) to allow the backward motion 5' of the shuttle (10).

11. The shuttle (10) according to at least one of the preceding claims, wherein the sleeve portion (14) ends posteriorly with a sealing skirt (32) that is divergent with respect to the outer side surface (15) of the sleeve portion (14), or to the tail length (30), according to a preset divergence angle (36), so as to adapt to an inner surface (101) of the conduit (100).

12. The shuttle according to claim 11, wherein the sealing skirt (32) has a section by a plane passing through the first longitudinal axis (P-P), tapered towards the rear end (13) starting from the end thickness (14') of the sleeve portion (14), or the tail portion (30), ending posteriorly with a sharp edge (14").

13. The shuttle (10) according to any of the preceding claims, wherein the elongated member (20) is a tubular member having an inner axial hole (33) open at both ends (21, 22) of the tubular member and communicating with the outside both at the shuttle front end (12), and at the shuttle rear end (13), said hole (33) being suitable to pass an end of the dragging wire (4) therein, to secure it to the elongated member (20) by said engaging means (34).

14. The shuttle according to any of the preceding claims wherein the elongated member (20) is made of an elastically deformable material.

15. The shuttle (10) according to any of the preceding claims, wherein the front wall (17) has an outer surface 18) that is suitably shaped to receive said engaging means (34) of the wire (4) to the elongated member (20) and/or wherein the front wall (17) has an outer surface (18) that is suitably shaped to receive an electronic vision device (35).

16. The shuttle according to at least one of the claims 2 to 15, wherein the front wall (17), the sleeve portion (14), the membranes (23), the elongated member (20), the tail portion (30), and the sealing skirt (32) are all formed together in a single piece from the same elastically deformable material.

17. A visual inspection device (200) of a conduit (100) comprising:
- a shuttle (10) according to any of the preceding claims,
- a video camera (35) mounted in said shuttle (10) and oriented to film the inside of the conduit.

18. A kit for laying a dragging wire in a conduit by means of a pressurized air flow introduced into said conduit, **characterized in that** it comprises:
- a shuttle according to at least any of the claims 1 to 17;
- a closure device (50) suitable to removably close a first free end of the conduit to form a closed thrust chamber (103) downstream of the shuttle to push the shuttle towards a second end (8) of the conduit by a pressurized air flow (2) inserted into the thrust chamber (103) through said closure device (50), said closure device (50) comprising:
- an elastic sealing member (54) having a substantially cylindrical tubular shape, having a first base end (61) and an opposite base end (62), said sealing member (54) defining a longitudinal axis L-L;
- a first compression member (55) couplable to said first end (61);
- a second compression member (56) couplable to said second end;
- compression means suitable to press said sealing member (54) between said first compression member (55) and said second compression member (56), so that the sealing member (54) deforms radially expanding outwardly, increasing its diameter;
- an inlet (80) for pressurized air through the closure device (50);
- a through opening (51) through the closure device (50) to allow the passage of the dragging wire (4).

19. A system for laying electrical cables into conduits, between a first end (6) and a second end (8) of the conduit (100), comprising:
- a shuttle (10) according to at least any of the claims 1 to 17, suitable to run along the conduit (100) from the first end (6) to the second end (8) of the conduit (100) by dragging the dragging wire (4);
- a closure device (50) mounted at the first end (6) of the conduit (100);
- means to obtain pressurized air to be flown into the conduit (100) through said inlet opening (80) of said closure device;
- means to pull a second end of the dragging wire (4), when a first end of the cables to be laid into the conduit (100) is tied to the first end of the dragging wire (4).
